# EUROPEAN PATENT APPLICATION

(11) **EP 4 563 206 A1**
(43) Date of publication of application: **04.06.2025**
(21) Application number: 23846948.0
(22) Date of filing: 25.07.2023
(51) Int. Cl.: B01B 1/00, B01D 1/02, B01D 1/14, B01J 19/24, C01B 3/34, H01M 8/0662, H01M 8/0612

(54) **STEAM GENERATING DEVICE, AND FUEL CELL SYSTEM INCLUDING SAME**

(30) Priority: 25.07.2022 KR 20220091642
(71) Applicant: Mico Power Ltd., Anseong-si, Gyeonggi-do 17567 (KR)
(72) Inventor: JEON, Kwang Sung, Anseong-si Gyeonggi-do 17567 (KR)
(74) Representative: Mewburn Ellis LLP
(86) International application number: PCT/KR2023/010707
(87) International publication number: WO 2024/025289

(57) **Abstract**

A steam generating device is disclosed. The steam generating device includes a container having an internal space; a space partition member including a first partition portion connected to a side wall of the container and having an opening formed in a central portion and a second partition portion extending downward from the opening, and configured to partition the internal space into a steam discharge space and a heating space; a preheating member arranged in the heating space of the container and configured to receive water from an external water supply device and preheat the water; a vaporization tube arranged in a coil shape surrounding the second partition portion in the heating space and having a first end portion connected to the preheating member and a second end portion in the steam discharge space; and a heating device configured to supply thermal energy to the heating space.

## Description

### Technical Field

The present invention relates to a steam generating device that supplies steam to a fuel reformer for reforming hydrocarbon fuel and a fuel cell system including the steam generating device.

### Background Art

A fuel cell generates electricity by using a reaction of hydrogen and oxygen. Fuel cells generate some hydrogen through external reformation by using hydrocarbon fuels such as city gas, and the generated hydrogen is used as fuel for the fuel cells. The fuel cells are most efficient when hydrogen is directly used as fuel, but in this case, a hydrogen storage tank has to be installed directly where the fuel cells are installed, which may cause serious safety issues. Therefore, in the case of fuel cells that operate at a relatively high temperature, hydrogen is generally generated by reforming hydrocarbon fuel within a fuel cell system, and then the hydrogen is used as fuel for the fuel cells.

As a method for reforming the hydrocarbon fuel, a steam reforming method that reacts steam and hydrocarbon fuel to generate hydrogen is mainly used. In the steam reforming method, hydrogen, carbon monoxide, carbon dioxide, and so on are mainly generated by a reaction of steam and hydrocarbon fuel, and these are supplied to fuel cells as fuel gas.

However, in the steam reforming method, when the amount of steam is less than the amount of hydrocarbon fuel or a reaction temperature is lowered, there is a problem that carbon (C) capable of rapidly damaging electrodes of fuel cells is generated by the reaction. Therefore, in order to prevent carbon (C) from being generated, steam has to be stably and uniformly supplied to a fuel reformer where a reaction of hydrocarbon fuel and steam occurs.

### Disclosure

### Technical Problem

An objective of the present invention is to provide a steam generating device that may stably and uniformly provide steam to a fuel reformer.

Another objective of the present invention is to provide a fuel cell system including the steam generating device.

### Technical Solution

A steam generating device according to an embodiment of the present invention includes a container having an internal space; a space partition member including a first partition portion connected to a side wall of the container and having an opening formed in a central portion and a second partition portion extending downward from the opening, and configured to partition the internal space into a steam discharge space and a heating space; a preheating member arranged in the heating space of the container and configured to receive water from an external water supply device and preheat the water; and a vaporization tube arranged in a coil shape surrounding the second partition portion in the heating space and having a first end portion connected to the preheating member and a second end portion in the steam discharge space.

In one embodiment, the preheating member may include a chamber arranged on a bottom surface of the container forming the heating space and providing a preheating space that accommodates water supplied from the external water supply device; and an inlet and an outlet formed respectively adjacent to the first end portion and the second end portion of the chamber which are opposite to each other and connected respectively to the external water supply device and the vaporization tube.

In one embodiment, the chamber may include a first chamber portion forming a first preheating space extending along a first side wall among side walls of the container, and a second chamber portion forming a second preheating space extending along a second side wall adjacent to the first side wall among the side walls of the container and connected to be bent from the first preheating space.

In one embodiment, the preheating member may further include a plurality of baffles arranged inside the preheating space of the chamber to increase a flow path length of a fluid moving through the preheating space. In this case, the plurality of baffles may include at least one first baffle protruding downward from an upper surface of the chamber forming an upper surface of the preheating space and at least one second baffle protruding upward from a lower surface of the chamber forming a lower surface of the preheating space, and the at least first baffle and the at least second baffle may be alternately arranged.

In one embodiment, the vaporization tube may include a bellows-type tube.

In one embodiment, the steam generating device may further include a steam pressure change reduction member arranged inside the vaporization tube and having a porous structure through which steam is capable of passing.

In one embodiment, the space partition member may further include a plurality of guide protrusion portions protruding from a surface of the second partition portion to support the vaporization tube.

A fuel cell system according to an embodiment of the present invention includes a steam generating device configured to convert liquid water provided from a water supply device into steam; a fuel reformer configured to react steam provided from the steam generating device with hydrocarbon fuel to generate fuel gas containing hydrogen; and a fuel cell stack configured to generate electricity by using the fuel gas provided from the fuel reformer and air provided from an external air supply device, wherein the steam generating device includes a container having an internal space; a space partition member including a first partition portion connected to a side wall of the container and having an opening formed in a central portion and a second partition portion extending downward from the opening, and configured to partition the internal space into a steam discharge space and a heating space; a preheating member arranged in the heating space of the container and configured to receive water from the water supply device and preheat the water; and a vaporization tube arranged in a coil shape surrounding the second partition portion in the heating space and having a first end portion connected to the preheating member and a second end portion in the steam discharge space.

In one embodiment, the preheating member may include a chamber arranged on a bottom surface of the container forming the heating space and providing a preheating space that accommodates water supplied from the water supply device; a plurality of baffles arranged inside the preheating space of the chamber to increase a flow path length of a fluid moving through the preheating space; and an inlet and an outlet formed respectively adjacent to the first end portion and the second end portion of the chamber which are opposite to each other and connected respectively to the water supply device and the vaporization tube.

**In** one embodiment, the chamber may include a first chamber portion forming a first preheating space extending along a first side wall among side walls of the container, and a second chamber portion forming a second preheating space extending along a second side wall adjacent to the first side wall among the side walls of the container and connected to be bent from the first preheating space.

**In** one embodiment, the plurality of baffles may include at least one first baffle protruding downward from an upper surface of the chamber forming an upper surface of the preheating space and at least one second baffle protruding upward from a lower surface of the chamber forming a lower surface of the preheating space, and the at least first baffle and the at least second baffle may be alternately arranged.

**In** one embodiment, the heating device may include a combustor configured to combust gas discharged from a fuel cell stack and supply the gas to the heating space.

### Advantageous Effects

According to a steam generating device of the present invention and a fuel cell system including the steam generating device, a position in which water is changed into steam may be advanced by arranging, in a heating space of a container, a preheating member that receives water from an external water supply device and supplying the water to a vaporization tube through the preheating member, and a certain amount of steam may be stably supplied to a fuel reformer by installing the plurality of baffles 132 inside the chamber 131 of the preheating member 130 to prevent or reduce occurrence of back pressure, and as a result, stability of power generated by a fuel cell stack may be significantly improved.

**In** addition, a vaporization tube is connected to a fuel reformer through a steam discharge space of a container without being directly connected to the fuel reformer, and thus, steam may be supplied more uniformly to the fuel reformer. **In** the conventional steam generating device, an external water supply device (not illustrated) generally supplies water to a vaporization tube by using a pump device and the vaporization tube is directly connected to a fuel reformer, and in this case, the steam supplied to the fuel reformer by pulsation of the pump device is also supplied unevenly according to the pulsation of the pump device. However, according to the present invention, in a case where first and second vaporization tubes are connected to a fuel reformer through a steam discharge space of a chamber, the steam discharge space may alleviate the pulsation of the pump device.

### Description of Drawings

FIG. 1 and FIG. 2 are respectively a cross-sectional view and a plan view illustrating a steam generating device according to an embodiment of the present invention.
FIG. 3 illustrates embodiments of a preheating member illustrated in FIG. 1 and FIG. 2.
FIG. 4 is a cross-sectional perspective view illustrating an embodiment of a vaporization tube illustrated in FIG. 1.
FIG. 5 is a cross-sectional view illustrating a steam pressure change reduction member according to an embodiment of the present invention.
FIG. 6 is a diagram illustrating a fuel cell system according to an embodiment of the present invention.

### Best Mode for Invention

Hereinafter, embodiments of the present invention are described in detail with reference to the attached drawings. Since the present invention may be variously changed and take various forms, specific embodiments are illustrated in the drawings, and the present invention is described in detail in the specification. However, this is not intended to limit the present invention to a specific disclosure form and should be understood to include all changes, equivalents, and substitutes included in the idea and technical scope of the present invention. While describing respective drawings, similar reference numerals are used for similar components. In the attached drawings, the dimensions of structures are enlarged more than actual sizes for the sake of clarity of the present invention.

The terms, first, second, and so on, may be used to describe various components, but the components should not be limited by the terms. The terms are used only for the purpose of distinguishing one component from another component. For example, the first component may be referred to as the second component without departing from the scope of the present invention, and similarly, the second component may also be referred to as the first component.

Terms used in the present disclosure are only used to describe specific embodiments and are not intended to limit the present invention. The singular expression includes the plural expression unless the context clearly indicates otherwise. In the present disclosure, terms, such as "comprise", "include", or "have" are intended to designate the presence of features, steps, operations, configurations, components, or combinations thereof described in the present disclosure, and should be understood that the terms do not exclude in advance the presence or possibility of addition of one or more other features, steps, operations, configurations, components, or combinations thereof.

Unless otherwise defined, all terms used herein, including technical or scientific terms, have the same meaning as commonly understood by those skilled in the art to which the present invention pertains. Terms that are commonly used and defined in the dictionary should be interpreted as having a meaning consistent with the meaning in the context of the related technology, and should not be interpreted in an ideal or excessively formal sense unless clearly defined in the present invention.

### <Steam generating device>

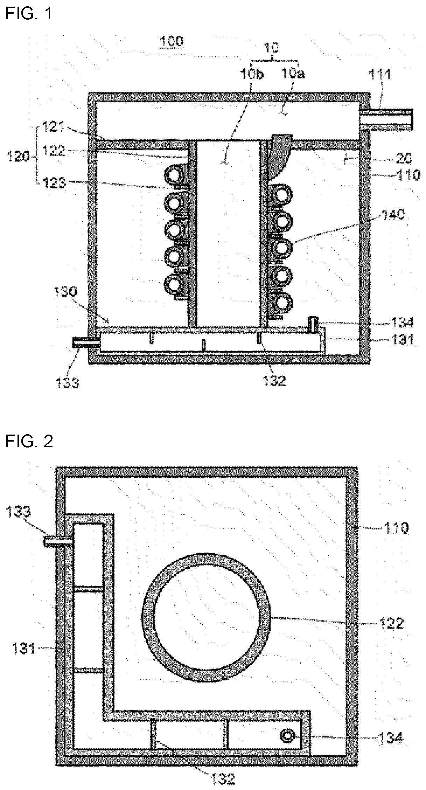

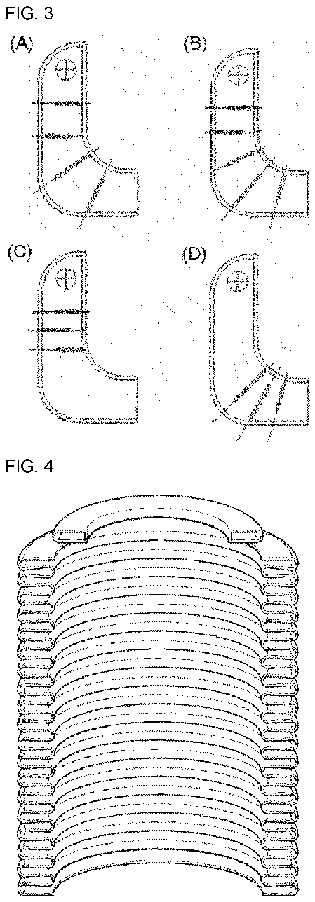

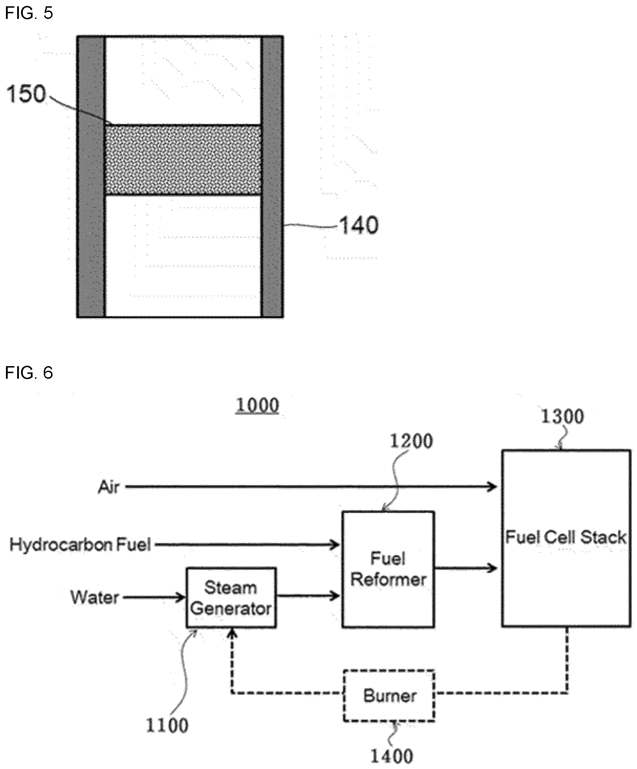

FIG. 1 and FIG. 2 are respectively a cross-sectional view and a plan view illustrating a steam generating device according to an embodiment of the present invention, FIG. 3 illustrates embodiments of a preheating member illustrated in FIG. 1 and FIG. 2, FIG. 4 is a cross-sectional perspective view illustrating an embodiment of a vaporization tube illustrated in FIG. 1, and FIG. 5 is a cross-sectional view illustrating a steam pressure change reduction member according to an embodiment of the present invention.

Referring to FIG. 1 to FIG. 5, a steam generating device 100 according to an embodiment of the present invention may provide steam to a fuel reformer (1200 of FIG. 6) that generates hydrogen required for a fuel cell reaction from hydrocarbon fuel that chemically contains hydrogen, such as methane (CH₄), ethane (C₂H₆), propane (C₃H₈), butane (C₄H₁₀), natural gas, or coal gas. In one embodiment, when methane (CH₄) is supplied as the hydrocarbon fuel, the fuel reformer 1200 may react the methane with the steam supplied from the steam generating device (100 and 1100 of FIG. 6) according to the following reaction formula 1 to generate hydrogen.

[Reaction Formula 1] 3CH₄+4H₂O→10H₂+2CO+CO₂

Along with this reaction, a side reaction that generates carbon (C) may occur inside the fuel reformer (1200 of FIG. 6) depending on a reaction temperature, a ratio of steam to carbon components, and so on as represented by reaction formula 2 below, and when the carbon generated by the side reaction is supplied to a fuel cell stack (1300 of FIG. 6), a fuel electrode of the fuel cell is damaged, and accordingly, there may be a problem in that performance of the fuel cell is rapidly reduced. Therefore, in order to suppress the carbon generation side reaction described above, steam has to be stably supplied to the fuel reformer.

[Reaction Formula 2] 2CO→C+CO₂

In one embodiment, the steam generating device 100 according to the embodiment of the present invention may include a container 110, a space partition member 120, a preheating member 130, and a vaporization tube 140.

The container 110 may have internal spaces 10 and 20, and the space partition member 120 may be arranged inside the container 110 to divide the internal spaces 10 and 20 of the container 110 into two spaces, that is, a steam discharge space 10 and a heating space 20. In addition, a steam outlet 111, through which steam is discharged, may be formed in a portion of the container 110 which forms a steam discharge space 10, and the steam outlet 111 may be connected to the fuel reformer (1200 of FIG. 6).

The container 110 and the space partition member 120 may each be formed of a material that is stable at high temperature. For example, the container 110 and the space partition member 120 may be formed of different materials, and may each be formed of a material, which is stable at high temperature, such as a metal, an alloy, a ceramic, a metal composite, or a composite of metal and ceramic. Meanwhile, the container 110 and the space partition member 120 may be formed of the same material or may be formed of different materials.

In one embodiment, the steam discharge space 10 may include a first space 10a directly connected to the steam outlet 111 and a second space 10b located below the first space 10a and temporarily storing water that is not converted into steam or is generated by cooling the steam, and the water stored in the second space 10b may be converted into steam by heat energy supplied to the heating space 20. In order to effectively supply the heat energy provided to the heating space 20 to the water stored in the second space 10b, the second space 10b may have an upper portion side connected to the first space 10a and have a side portion and/or bottom portion surrounded by the heating space 20. In this way, a shape of the second space 10b is not limited in particular as long as the second space 10b may accommodate water and effectively receive heat energy from the heating space 20. For example, the second space 10b may have a shape, such as a cylinder, a square column, a cone, or a square pyramid, a side portion of which is surrounded by the heating space 20.

In one embodiment, in order to form the first space 10a and the second space 10b, the space partition member 120 may include a first partition portion 121 and a second partition portion 122. The first partition portion 121 may have an opening of a predetermined shape formed in a central portion, be connected to a side wall of the container 110, and partition the first space 10a from the heating space 20. The second partition portion 122 may extend downward from the opening of the first partition portion 121 to form the second space 10b and may partition the second space 10b and the heating space 20.

In one embodiment, the space partition member 120 may include a plurality of guide protrusion portions 123 protruding from a surface of the second partition portion 122 toward the vaporization tube 140. The guide protrusion portions 123 may support a lower portion of the vaporization tube 140 to guide and maintain an arrangement position of the vaporization tube 140.

The preheating member 130 may receive water from an external water supply device (not illustrated) and preheat the water, and supply the preheated water or steam to the vaporization tube 140.

In one embodiment, the preheating member 130 may include a chamber 131, a plurality of baffles 132, an inlet 133, and an outlet 134.

The chamber 131 may be arranged on a bottom surface of the heating space 20 inside the container 110 and may provide a preheating space in which water supplied from an external water supply device (not illustrated) is accommodated.

In one embodiment, the chamber 131 may be arranged to be separated from the second partition portion 122 and may include a first chamber portion that forms a first preheating space extending along a first sidewall among sidewalls of the container 110, and a second chamber portion that forms a second preheating space extending along a second sidewall adjacent to the first sidewall among the sidewalls of the container 110 and connected to be bent from the first preheating space. As illustrated in FIG. 3, shapes of the first and second chamber portions may be variously changed. For example, widths of the first and second chamber portions in a direction perpendicular to a fluid flow may be changed depending on positions, and for example, a width of a bent portion may be greater than a width of the other portion.

Meanwhile, the chamber 131 may further include a third chamber portion that forms a third preheating space extending along a third side wall adjacent to the second side wall among the side walls of the container 110 and connected to be bent from the second preheating space, or may further include a fourth chamber portion that forms a fourth preheating space extending along a fourth side wall adjacent to the third side wall among the side walls of the container 110 and connected to be bent from the third preheating space, together with the third chamber portion.

The plurality of baffles 132 may be arranged inside the preheating space of the chamber 131 to increase a flow path length of water or steam moving through the preheating space, and may reduce or prevent a back pressure from occurring within the preheating space.

In one embodiment, the plurality of baffles 132 may include at least one first baffle protruding downward from an upper surface of the chamber 131 forming an upper surface of the preheating space and at least one second baffle protruding upward from a lower surface of the chamber 131 forming a lower surface of the preheating space, and the first and second baffles may be alternately arranged. Meanwhile, as illustrated in FIG. 3, heights, intervals, numbers, positions, and so on of the first and second baffles are not limited in particular and may be appropriately adjusted depending on required performances. For example, the first and second baffles may be uniformly arranged inside the chamber (see A and B), arranged at positions closer to the inlet 133 than the outlet 134, or arranged at positions closer to the outlet 134 than the inlet 133.

The inlet 133 may connect the preheating space of the chamber 131 to the external water supply device (not illustrated), and the outlet 134 may connect the preheating space of the chamber 131 to the vaporization tube 140.

In one embodiment, in order to increase a flow path length within the preheating space, the inlet 133 may be formed adjacent to a first end side of the chamber 131, and the outlet 134 may be formed adjacent to a second end side of the chamber 131 opposite to the first end.

The vaporization tube 140 may be arranged in a coil shape surrounding the second space 10b within the heating space 20. The vaporization tube 140 may each have a first end portion connected to the outlet 134 of the preheating member 130 and a second end portion located within the steam discharge space 10, and may be arranged to extend to the steam discharge space 10 via the heating space 20.

When the vaporization tube 140 is installed as described above, water supplied from the preheating member 130 to the vaporization tube 140 may be converted into steam while moving through the heating space 20, and the converted steam may be discharged into the steam discharge space 10 through the second end portion of the vaporization tube 140. In addition, the steam discharged from the vaporization tube 140 into the steam discharge space 10 may be supplied to the fuel reformer (1200 of FIG. 6) through the steam outlet 111.

In one embodiment, the vaporization tube 140 may include a bellows type tube having wrinkles formed on an inner surface thereof as illustrated in FIG. 4. In this way, when the vaporization tube 140 is formed as a bellows type tube, not only water may be converted into steam with higher efficiency due to an increase in surface area caused by internal wrinkles of the vaporization tube 140, but also a change in pressure of the steam discharged from the vaporization tube 140 may be reduced.

In one embodiment of the present invention, the steam generating device 100 may further include a heating device (not illustrated) that supplies thermal energy to the heating space 20 to convert water moving through the preheating member 130 and the vaporization tube 140 into steam.

In one embodiment, the heating device may include a high-temperature gas supply device (see 1400 of FIG. 6) that supplies high-temperature gas to the heating space. In this case, a gas supply hole through which high-temperature gas is injected from the high-temperature gas supply device and a gas outlet through which high-temperature gas is discharged from the heating space 20 may be formed in a portion of the container 110 which forms the heating space 20. The high-temperature gas is not limited in particular as long as the temperature of the heating space 20 may be increased. In one embodiment, the high-temperature gas may be gas discharged from a fuel cell stack (1300 of FIG. 6). For example, the heating device may combust the gas discharged from the fuel cell stack by using a combustor (1400 of FIG. 6) or so on and then supply the combusted high-temperature gas to the heating space 20 through a blower or so on.

In another embodiment, the heating device may include an electric heater (not illustrated) and so on installed on a side wall of the container 110 forming the heating space 20.

Meanwhile, in one embodiment, the steam generating device 100 according to the embodiment of the present invention may further include a temperature sensor (not illustrated) coupled to a lower portion of the second space 10b in the container 110 to measure the temperature inside the container 110.

Meanwhile, in one embodiment, as illustrated in FIG. 5, the steam generating device 100 according to the embodiment of the present invention may further include a steam pressure change reduction member 150 inside the vaporization tube 140 to reduce a pressure change of the steam discharged from the vaporization tube 140.

The steam pressure change reduction member 150 may be arranged adjacent to a second end portion of the vaporization tube 140 from which steam is discharged, and may have a porous structure through which steam may pass. For example, the steam pressure change reduction member 150 may include a mesh structure or a foam structure inserted into the vaporization tube 140. The steam pressure change reduction member 150 may reduce a phenomenon of steam pressure change due to the LeidenFrost effect.

Meanwhile, in one embodiment, the steam generating device 100 according to the embodiment of the present invention may further include a water detector (not illustrated) that is arranged in the second space 10b and detects liquid water existing in the second space 10b. When steam is not supplied to the fuel reformer (1200 of FIG. 6), such as when liquid water is stored in the second space 10b without being converted into steam in the vaporization tube 140 due to an abnormal situation such as a decrease in temperature of high-temperature gas or a failure of a heating device, a large amount of carbon that damages a fuel electrode of a fuel cell may be generated as described above. The water detector may detect liquid water existing in the second space 10b and notify of occurrence of an abnormal situation in advance as described above, and accordingly, stability of a fuel cell system may be significantly improved. As long as the liquid water in the second space 10b may be detected, a configuration of the water detector is not limited in particular.

According to the steam generating device of the present invention, a position in which water is changed into steam may be advanced by arranging, in a heating space of a container, a preheating member that receives water from an external water supply device and supplying the water to a vaporization tube through the preheating member, and a certain amount of steam may be stably supplied to a fuel reformer by installing the plurality of baffles 132 inside the chamber 131 of the preheating member 130 to prevent or reduce occurrence of back pressure, and as a result, stability of power generated by a fuel cell stack may be significantly improved.

In addition, a vaporization tube is connected to a fuel reformer through a steam discharge space of a container without being directly connected to the fuel reformer, and thus, steam may be supplied more uniformly to the fuel reformer. In the conventional steam generating device, an external water supply device (not illustrated) generally supplies water to a vaporization tube by using a pump device and the vaporization tube is directly connected to a fuel reformer, and in this case, the steam supplied to the fuel reformer by pulsation of the pump device is also supplied unevenly according to the pulsation of the pump device. However, in a case where first and second vaporization tubes are connected to a fuel reformer through a steam discharge space of a chamber as in the present invention, the steam discharge space may alleviate the pulsation of the pump device.

### <Fuel Cell System>

FIG. 6 is a diagram illustrating a fuel cell system according to an embodiment of the present invention.

Referring to FIG. 6 together with FIG. 1 to FIG. 4, a fuel cell system 1000 according to an embodiment of the present invention may include a steam generating device 1100, a fuel reformer 1200, and a fuel cell stack 1300.

The steam generating device 1100 may receive liquid water from an external water supply device (not illustrated), convert the water into steam, and then supply the steam to the fuel reformer 1200. Because the steam generating device 100 described above with reference to FIG. 1 to FIG. 5 may be applied as the steam generating device 1100, detailed descriptions thereof are omitted.

The fuel reformer 1200 may generate fuel gas containing hydrogen by reacting hydrocarbon fuel supplied from an external fuel supply device (not illustrated) with steam supplied from the steam generating device 1100. Any known or future fuel reformer may be applied as the fuel reformer 1200 without limitation, and accordingly, detailed descriptions thereof are omitted.

The fuel cell stack 1300 may generate electricity by using hydrogen of fuel gas provided from the fuel reformer 1200 and oxygen of air provided from an external air supply device (not illustrated). Any solid oxide fuel cell stack, solid polymer fuel cell stack, phosphoric acid fuel cell stack, molten carbonate fuel cell stack, or so on may be applied as the fuel cell stack 1300 without limitation.

Meanwhile, in the fuel cell system 1000 according to the embodiment of the present invention, a heating device of the steam generating device 1100 may include a combustor 1400 illustrated in FIG. 6.

The combustor 1400 may combust the gas discharged from the fuel cell stack 1300 and then supply high-temperature combustion gas to the heating space 20 of the steam generating device 1100. Also, the combustor 1400 may supply thermal energy required for reaction between the hydrocarbon fuel and the steam to the fuel reformer 1200. A known combustion device may be applied as the combustor 1400 without limitation.

Although a preferred embodiment of the present invention is described, it will be understood by those skilled in the art that the present invention may be variously modified and changed within the scope and idea of the present invention as set forth in the following patent claims.

## Claims

1. A steam generating device comprising:
a container having an internal space;
a space partition member including a first partition portion connected to a side wall of the container and having an opening formed in a central portion and a second partition portion extending downward from the opening, and configured to partition the internal space into a steam discharge space and a heating space;
a preheating member arranged in the heating space of the container and configured to receive water from an external water supply device and preheat the water; and
a vaporization tube arranged in a coil shape surrounding the second partition portion in the heating space and having a first end portion connected to the preheating member and a second end portion in the steam discharge space.

2. The steam generating device of claim 1, wherein
the preheating member comprises a chamber arranged on a bottom surface of the container forming the heating space and providing a preheating space that accommodates water supplied from the external water supply device, and an inlet and an outlet formed respectively adjacent to the first end portion and the second end portion of the chamber which are opposite to each other and connected respectively to the external water supply device and the vaporization tube.

3. The steam generating device of claim 2, wherein
the chamber includes a first chamber portion forming a first preheating space extending along a first side wall among side walls of the container, and a second chamber portion forming a second preheating space extending along a second side wall adjacent to the first side wall among the side walls of the container and connected to be bent from the first preheating space.

4. The steam generating device of claim 2, wherein
the preheating member further includes a plurality of baffles arranged inside the preheating space of the chamber to increase a flow path length of a fluid moving through the preheating space.

5. The steam generating device of claim 4, wherein
the plurality of baffles include at least one first baffle protruding downward from an upper surface of the chamber forming an upper surface of the preheating space and at least one second baffle protruding upward from a lower surface of the chamber forming a lower surface of the preheating space, and
the at least first baffle and the at least second baffle are alternately arranged.

6. The steam generating device of claim 1, wherein
the vaporization tube includes a bellows-type tube.

7. The steam generating device of claim 1, further comprising:
a steam pressure change reduction member arranged inside the vaporization tube and having a porous structure through which steam is capable of passing.

8. The steam generating device of claim 1, wherein
the space partition member further includes a plurality of guide protrusion portions protruding from a surface of the second partition portion to support the vaporization tube.

9. A fuel cell system comprising;
a steam generating device configured to convert liquid water provided from a water supply device into steam;
a fuel reformer configured to react steam provided from the steam generating device with hydrocarbon fuel to generate fuel gas containing hydrogen; and
a fuel cell stack configured to generate electricity by using the fuel gas provided from the fuel reformer and air provided from an external air supply device,
wherein the steam generating device comprises:
a container having an internal space;
a space partition member including a first partition portion connected to a side wall of the container and having an opening formed in a central portion and a second partition portion extending downward from the opening, and configured to partition the internal space into a steam discharge space and a heating space;
a preheating member arranged in the heating space of the container and configured to receive water from the water supply device and preheat the water; and
a vaporization tube arranged in a coil shape surrounding the second partition portion in the heating space and having a first end portion connected to the preheating member and a second end portion in the steam discharge space.

10. The fuel cell system of claim 9, wherein the preheating member comprises:
a chamber arranged on a bottom surface of the container forming the heating space and providing a preheating space that accommodates water supplied from the water supply device;
a plurality of baffles arranged inside the preheating space of the chamber to increase a flow path length of a fluid moving through the preheating space; and
an inlet and an outlet formed respectively adjacent to the first end portion and the second end portion of the chamber which are opposite to each other and connected respectively to the water supply device and the vaporization tube.

11. The fuel cell system of claim 10, wherein
the chamber includes a first chamber portion forming a first preheating space extending along a first side wall among side walls of the container, and a second chamber portion forming a second preheating space extending along a second side wall adjacent to the first side wall among the side walls of the container and connected to be bent from the first preheating space.

12. The fuel cell system of claim 10, wherein
the plurality of baffles include at least one first baffle protruding downward from an upper surface of the chamber forming an upper surface of the preheating space and at least one second baffle protruding upward from a lower surface of the chamber forming a lower surface of the preheating space, and
the at least first baffle and the at least second baffle are alternately arranged.

13. The fuel cell system of claim 9, further comprising:
a heating device configured to supply thermal energy to the heating space.

14. The fuel cell system of claim 13, wherein
the heating device includes a combustor configured to combust gas discharged from a fuel cell stack and supply the gas to the heating space.
